# EUROPEAN PATENT SPECIFICATION

(11) **EP 2 599 283 B1**
(45) Date of publication and mention of the grant of the patent: **16.05.2018**
(21) Application number: 11751891.0
(22) Date of filing: 31.08.2011
(51) Int. Cl.: H04L 29/08, G06F 9/44

(54) **HELP CHANNEL**
HILFEKANAL
CANAL D'AIDE

(30) Priority: 02.09.2010 GB 201014611
(43) Date of publication of application: 05.06.2013
(73) Proprietor: Skype, Dublin 2 (IE)
(72) Inventor: DODD, Neil, HP9 1QZ (GB); SOPIEVA, Natasha, AI3 5JH (GB)
(74) Representative: Driver, Virginia Rozanne
(86) International application number: PCT/EP2011/065058
(87) International publication number: WO 2012/028665

(56) References cited:
- WO-A1-00/68769
- US-A1- 2006 050 865
- US-A1- 2009 089 751

## Description

### Field of the Invention

This invention relates to providing media content to a user at a user terminal.

### Background

Voice over internet protocol ("VoIP") communication systems allow the user of a device, such as a personal computer, to make calls across a computer network such as the Internet. These systems are beneficial to the user as they are often of significantly lower cost than fixed line or mobile networks. This may particularly be the case for long distance calls. To use VoIP, the user must install and execute client software on their device. The client software provides the VoIP connections as well as other functions such as registration and authentication. In addition to voice communication, the client may also provide video calling and instant messaging ("IM").

If the user requires help or technical assistance with using the client software the user can access a help facility. This help facility is accessed by the user selecting a help tab or window in the user interface of the client software.

Skype™ is one example of client software that implements a help facility. In Skype, responsive to the user selecting a help tab or window in the user interface the user will be directed to webpage where answers to 'Frequently Asked Questions' or 'FAQs' are displayed to the user. These 'FAQs' are directed to all the users of the client software and are not specific to an individual user. As a result the 'FAQs' often contains help information that may not be relevant to the user.

The word processing application Microsoft Word provides a help facility to its users. Once the help facility is accessed the user may search for help documents using a keyword search. The user must then select a help document displayed amongst a plurality of help documents in the keyword search results. The user is then able to read the help document in order to resolve the user's problem. This can often be a time consuming process as the user may have to enter variations or combinations of keywords in the keyword search before a relevant help document appears in the help search results. Furthermore the help documents themselves are available to all the users of Microsoft Word and are often written by Microsoft in a way such that all users will understand the information. As a result an experienced user of Microsoft Word that requires help or technical assistance on a certain issue may have to read through large quantities of information that he does not require before arriving at the relevant section that he will find useful.

In addition to the help facilities provided by the client software, the software providers often advertise new features of the client software by delivering content to its users. The client software MSN messenger delivers content to its users. This content can take the form of text, images, videos and animations and often appear in pop up windows (for example the 'MSN Today' window that is displayed responsive to the user logging into the MSN messenger client) or in areas of the client software user interface. As the content is delivered to all the users of the client software, users who have installed the new feature will also receive this content. As a result these users of the client software can become frustrated with content being displayed at their user terminal that relates to features of the client software that they already use.

Advertising content can also be delivered to web pages. DoubleClick ® delivers advertising content to a user browsing web pages in dependence on information about the user. Such information is stored with cookies on their device and can include the gender or age of the user. It is apparent that the advertising content is delivered to a large quantity of users i.e. male users or users aged between 18 - 25. As a result users browsing web pages can become frustrated with advertising content being displayed at their user device that is not relevant to them.

US2006/0050865 discloses a system and method for adapting the level of instructional detail provided through a user interface to a user completing a task flow.

There is therefore a need for a technique to address the aforementioned problems with providing media content to a user of a communication client application.

### Summary of Invention

In a first aspect of the present invention there is provided a method of providing selectable media content from a server to a user at a user terminal, the method comprising: storing variables relating to the user's familiarity with a communication client application executable at the user terminal; executing program code to read said variables to determine the media content to be provided to the user based on said variables; retrieving said determined media content from the server; and providing said media content to the user at the user terminal, wherein the user's familiarity with the communication client application is assessed based on the user's usage of the communication client; wherein the user's usage is based on at least one of: the number of days since the user registered; the number of contacts that the user has; the number of days since the user registered and the number of contacts that the user has; whether the user has made any calls to a PSTN or mobile device; whether the user has set up voice mail; whether the user has set up call forwarding; whether the user has sent an SMS to a mobile device; whether the user has made any VOIP calls; whether the user has made any video calls.

In one embodiment, the variables are stored at the user terminal. In another embodiment the variables are stored at the server.

Preferably, the user's familiarity with the communication client application is assessed based on the user's usage of the communication client application.

Preferably, the program code is stored at the server.

Preferably, the communication client application retrieves the program code from the server.

Preferably, at least one or both of the retrieval and execution of the program code is performed responsive to an interaction comprising (i) the user logging into the communication client application, or (ii) the user selecting a window provided in the communication client application.

In one case, the program code is retrieved at log-in and executed responsive to the user selecting a window provided in the communication client application.

Preferably, responsive to the user interacting with the communication client application the communication client application compares program code stored at the user terminal with program code stored at the server, and wherein the program code stored at the user terminal is executed by the communication client application if the program code stored at the user terminal is the same as the program code stored at the server, and wherein the program code stored at the server is retrieved and executed by the communication client application if the program code stored at the server is an updated version of the program code stored at the user terminal.

In one embodiment the communication client application provides the variables to the server, and the program code is executed at the server.

Preferably, the media content is a video, for example a tutorial video; or an audio recording; or text and images.

Preferably the communication client application is one of a voice over internet protocol communication client; a peer-to-peer communication client; an instant messaging communication client.

In a second aspect of the present invention there is provided a user terminal for receiving selectable media content from a server, the user terminal comprising: means for executing a communication client application; means for accessing variables relating to a user's familiarity with the communication client application; means for executing program code to read said variables to determine the media content to be provided to the user based on said variables; means for retrieving said determined media content from the server; and means for providing said media content to the user at the user terminal, wherein the user's familiarity with the communication client application is assessed based on the user's usage of the communication client; wherein the user's usage is based on at least one of: the number of days since the user registered; the number of contacts that the user has; the number of days since the user registered and the number of contacts that the user has; whether the user has made any calls to a PSTN or mobile device; whether the user has set up voice mail; whether the user has set up call forwarding; whether the user has sent an SMS to a mobile device; whether the user has made any VOIP calls; whether the user has made any video calls.

Preferably the means for accessing the variables accesses them from storage means at the server.

In a third aspect of the present invention there is provided a server for providing media content to a user terminal, the server comprising: storage means for storing media content; means for accessing variables relating to a user's familiarity with a communication client application executable at the user terminal; selection means for selecting media content from
storage means, said selection based on said variables; and means for providing said media content to the user terminal in response to receiving a request from the user terminal, wherein the user's familiarity with the communication client application is assessed based on the user's usage of the communication client; wherein the user's usage is based on at least one of: the number of days since the user registered; the number of contacts that the user has; the number of days since the user registered and the number of contacts that the user has; whether the user has made any calls to a PSTN or mobile device; whether the user has set up voice mail; whether the user has set up call forwarding; whether the user has sent an SMS to a mobile device; whether the user has made any VOIP calls; whether the user has made any video calls.

In a fourth aspect of the present invention there is provided a computer program product for providing selectable media content from a server to a user at a user terminal, the computer program product comprising code embodied on a non-transient computer-readable medium and configured so as when executed on a processing apparatus to: store variables relating to the user's familiarity with a communication client application executable at the user terminal; and trigger the execution of further program code to read said variables to determine the media content to be provided to the user based on said variables, thereby enabling the determined media content from the server to be retrieved and provided to the user at the user terminal, wherein the user's familiarity with the communication client application is assessed based on the user's usage of the communication client; wherein the user's usage is based on at least one of: the number of days since the user registered; the number of contacts that the user has; the number of days since the user registered and the number of contacts that the user has; whether the user has made any calls to a PSTN or mobile device; whether the user has set up voice mail; whether the user has set up call forwarding; whether the user has sent an SMS to a mobile device; whether the user has made any VOIP calls; whether the user has made any video calls.

In a fifth aspect of the present invention there is provided a communication system comprising a user terminal and a server connected to a communication network, wherein the user terminal receives selectable media content from a server over the communication network, the system comprising: means at the user terminal for executing a communication client application; means for accessing variables relating to a user's familiarity with the communication client application; means for executing program code to read said variables to determine the media content to be provided to the user based on said variables; and means at the server for providing said media content to the user terminal in response to receiving a request from the user terminal, wherein the user's familiarity with the communication client application is assessed based on the user's usage of the communication client; wherein the user's usage is based on at least one of: the number of days since the user registered; the number of contacts that the user has; the number of days since the user registered and the number of contacts that the user has; whether the user has made any calls to a PSTN or mobile device; whether the user has set up voice mail; whether the user has set up call forwarding; whether the user has sent an SMS to a mobile device; whether the user has made any VOIP calls; whether the user has made any video calls.

### Detailed Description

For a better understanding of the present invention and to show how the same may be put into effect, reference will now be made, by way of example, to the following drawings in which:

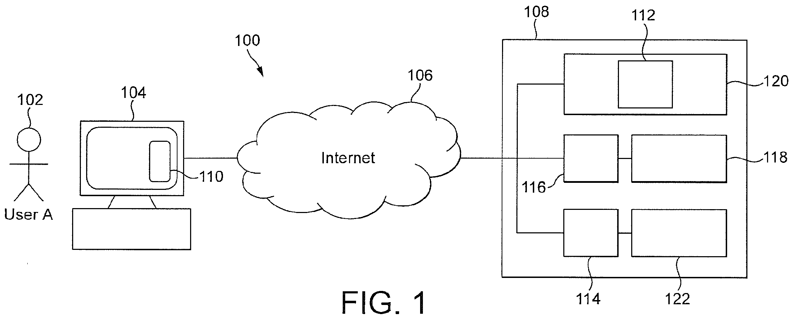

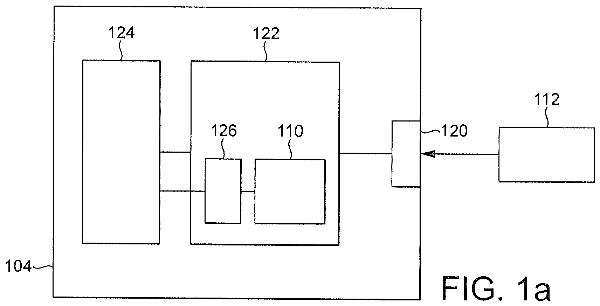

Figure 1 shows a P2P communication system;
Figure 1 a shows a detailed view of a user terminal on which is executed a client;
Figure 2 shows a user interface of a client executed on a user terminal;
Figure 3 shows the process of how media content is retrieved from a server to a client;
Figure 4 shows how a program determines relevant media content that is to be retrieved from a server;
Figure 5a and 5b show example routines that a program executes

The description below describes an embodiment where media content is provided from a server that is dependent on a user's familiarity with a communication client application. The media content is provided in a user interface of the communication client application and can contain text, images, and streaming video. Media content is only retrieved from the server and provided to the user if it is relevant to that user's familiarity with the communication client application. In this embodiment the media content to be provided to the user is determined by reading variables that are monitored and stored by the communication client application. These variables are related to the user's usage of the communication client application and are described in more detail below

Reference is first made to Figure 1, which illustrates a peer-to-peer (P2P) communication system 100. Note that whilst this illustrative embodiment is described with reference to a P2P communication system, other types of communication system could also be used, such as instant messaging systems and other, non-P2P, VoIP systems. A first user of the P2P communication system (denoted "User A" 102) operates a user terminal 104, which is shown connected to a network 106, such as the Internet. The user terminal 104 may be, for example, a personal computer ("PC"), personal digital assistant ("PDA"), a mobile phone, a gaming device or other embedded device able to connect to the network 106. The user terminal 104 is arranged to receive information from and output information to a user 102 of the device. In a preferred embodiment of the invention the user terminal 104 comprises a display such as a screen, a keyboard, speakers and a mouse. The user terminal 104 is running a client 110, provided by a P2P software provider.

Those skilled in the art will appreciate that the Internet 106 can be connected to other types of networks (not shown in Figure 1) such as a traditional Public-Switched Telephone Network (PSTN) or other circuit switched network, and/or to a mobile telecommunications network, such as a mobile cellular network.

As shown in Figure 1, connected to the network 106 is a content server 108. The content server includes a content retrieval program 112 stored in a store 120 which can be downloaded to the user terminal 104. In one embodiment a memory 114 can be provided to store variables relating to a user's usage of the communication client application 110, and content selection block 116 selects the relevant media content from a content store 118. The content server 108 includes a processor 122 which in one embodiment executes the content retrieval program 112.

The user terminal 104 is now described in more detail with reference to Figure 1 a.

The communication client application 110 is a software program executed on a local processor 122 in the user terminal 104. The communication client application 110 may download a content retrieval program 112 from the content server 108 over the network 106, the content retrieval program 112 being received at the user terminal 104 at a network interface 120. The communication client application 110 is connected to a monitoring block 126 that monitor's User A's usage of the communication client application 110. As an alternative or in addition to the memory 114, a memory 124 can be provided to store variables relating to User A's usage of the communication client application 110.

It will be appreciated that memory 124 may comprise a single memory unit or a plurality of memory units. Memory 124 may include but is not limited to RAM, ROM, SRAM, EPROM, EEPROM.

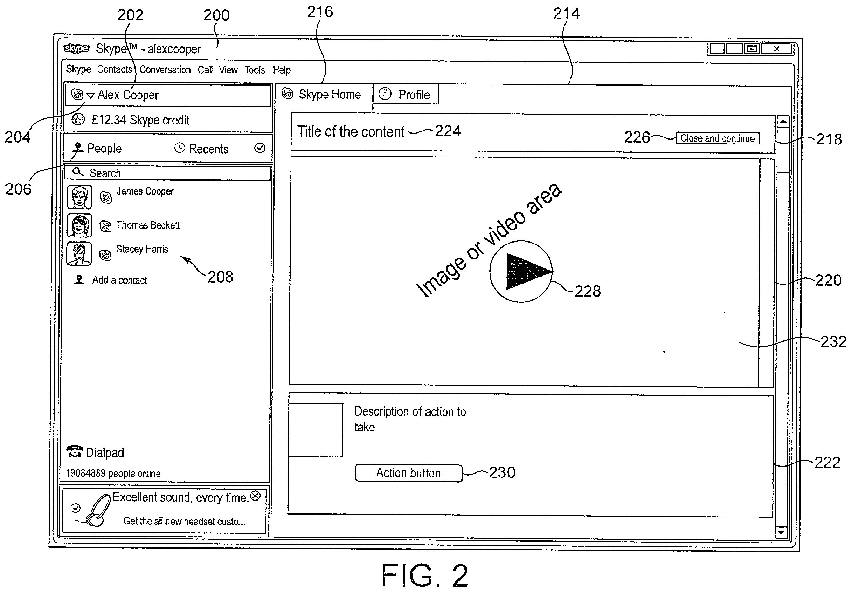

Figure 2 shows the client user interface 200 that is displayed on the user terminal 104 when User A 102 logs into the communication client application 110.

The client user interface 200 displays the username 202 of User A 102 in the P2P system, and User A can set his own presence state (that will be seen by other users) using a drop down list by selecting icon 204. The client user interface 200 comprises a tab 206 labelled "people", and when this tab is selected the contacts 208 stored by the user in a contact list are displayed.

The client user interface 200 further comprises a window 214. The window 214 utilizes browser software on the user terminal 104 to provide media content in the window 214. When User A 102 logs into the client 110 the user will be able to access a help channel 216 (depicted as 'Skype Home' in Figure 2) by selecting a tab provided in the client user interface 200.

The help channel launches a help channel page which consists of a "title area" 218, a "video or images area" 220, and a "action area" 222.

The title area 218 can contain the text indicating the title of the content 224 and an activation button 226. Upon selection of the activation button 226 the help channel page is closed.

The video or images area 220 can contain text, images, streaming video and an action button 228 to commence the video stream.

The action area 222 can contain multiple instances of text, images, drop-down list to allow user to filter information, entry text box to facilitate further activity, and an action button 230. The action button 230 allows the user to do one or more of: open a web page in the user's browser, initiate an activity in the client, open another window to be displayed in web window 214, switch to another video that is determined to be relevant to the user, act upon drop down list selection, and act upon text box entry. The activities in the client that may be initiated by action button 230 may include but are not limited to initiating a call, initiating an IM, and opening a window in web window 214 to import contacts stored on the user terminal to the communication client application 110.

Once User A has registered with the communication client application 110, variables relating to the User A's usage of the communication client application 110 are monitored and stored in memory 124 at the communication client application 110 and/or in memory 114 at the server 108.

These variables may include (i) the number of days since the user registered; (ii) the number of contacts that the user has; (iii) whether the user has made any calls to a PSTN or mobile device; (iv) whether the user has set up Voice Mail; (v) whether the user has set up Call Forwarding; (vi) whether the user has sent an SMS; and (vii) whether the user has made any VOIP calls. Activities (iii) to (vii) can be determined by monitoring the users interaction with the user interface with the communication client application 110, and storing data accordingly. Variables such as (i) and (ii) can be monitored and updated on an ongoing basis. Other variables can also be monitored as discussed later.

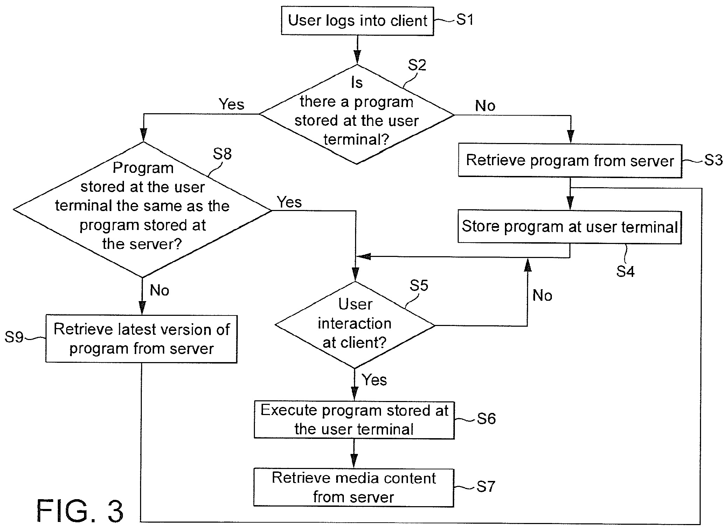

With reference to the flow chart in Figure 3, the process of how media content is retrieved from the server 108 to the client 110 will now be described.

The process starts at step S1 when User A 102 logs in to the communication client application. At step S2 the communication client application 110 determines whether a content retrieval program 112 is stored at the user terminal 104. If no such program is stored at the user terminal the process proceeds to step S3 where the communication client application 110 retrieves a content retrieval program 112 from the server 108. The retrieved content retrieval program 112 is then stored at step S4 in memory 124.

Referring back to step S2, if a content retrieval program 112 is already stored at the user terminal 104, the process proceeds to step S8 where the communication client application 110 determines if the content retrieval program 112 stored at the user terminal 104 is the same as the content retrieval program 112 stored in the store 120 at the server 108. If the content retrieval program 112 stored at the user terminal 104 is the same as the content retrieval program 112 stored in the store 120 at the server 108 then there is no new version of the content retrieval program 112 at the server 108 and the process proceeds to step S5.

If the content retrieval program 112 stored at the user terminal 104 is not the same as the content retrieval program 112 stored in the store 120 at the server 108 then there is a new version of the content retrieval program 112 at the server 108 and the process proceeds to step S9. At step S9 the communication client application 110 retrieves the latest version of the content retrieval program 112 from the server 108 and the process proceeds to step S4 where the retrieved content retrieval program 112 is stored.

The content retrieval program 112 may be retrieved responsive to the user interacting with the communication client application 110. This interaction may include the user logging into the communication client application 110 or selecting a window provided in the communication client application 110.

In one mode of operation, the content retrieval program 112 is retrieved from the server 108 and executed at the user terminal 104 responsive to the user interacting with the communication client application 110. This user interaction may include the user logging into the communication client application 110. It will be appreciated that in this mode of operation the step S5 shown in Figure 3 is not required.

In this mode of operation, following determining at step S8 that there is no new version of the content retrieval program 112 at the server 108, or storing the retrieved content retrieval program 112 at the user terminal 104 at step S4, the process proceeds to step S6.

At step S6 the content retrieval program 112 that is stored at the user terminal is executed. When the content retrieval program 112 is executed the variables relating to User A's usage of the communication client application 110 are read by the content retrieval program 112 to determine the relevant media content that is to be retrieved from the content store 118 at the server 108. At step S7 the client retrieves the relevant media from the content server 108.

In a further mode of operation, the content retrieval program 112 is retrieved from the server 108 and executed at the user terminal 104 responsive to the user interacting with the communication client application 110. This interaction may include the user selecting a window provided in the communication client application 110.

It will be appreciated that in this further mode of operation, the step S5 shown in Figure 3 is repositioned to be located after S1. In this further mode of operation the step S2 of checking whether there is a content retrieval program 112 stored at the user terminal is not proceeded to until a user interaction is detected at the communication client application 110. When a user interaction is detected, the process proceeds to step S2 and continues as described above.

In another mode of operation, the latest version of the content retrieval program 112 is stored at the user terminal 104 responsive to the user logging in to the communication client application 110. It will be appreciated that the latest version of the content retrieval program 112 may be stored at the user terminal through steps S1, S2, S3 and S4; steps S1, S2 and S8; or steps S1, S2, S8, S9 and S4.

Once the latest version of the content retrieval program 112 is stored at the user terminal 104 the process proceeds to step S5 (as shown in Figure 3).

At step S5 it is determined whether the user has interacted with the communication client application 110, this interaction may include the user selecting a window provided in the communication client application 110. If no interaction is detected the process continually loops until an interaction is detected. When an interaction is detected the process proceeds to step S6 where the content retrieval program 112 that is stored at the user terminal is executed.

When the content retrieval program 112 is executed the variables relating to User A's usage of the communication client application 110 are read by the content retrieval program 112 to determine the relevant media content that is to be retrieved from the content store 118 at the server 108. At step S7 the client retrieves the relevant media from the content server 108.

It will be appreciated that the content retrieval program 112 may comprise computer program code of any length or size. The content retrieval program 112 may comprise a whole computer program or a portion of computer program code that may be used to update a program already stored at the user terminal 104. It will also be appreciated that the content retrieval program 112 may be written in any programming language including JavaScript, Java, C, C++ and Basic.

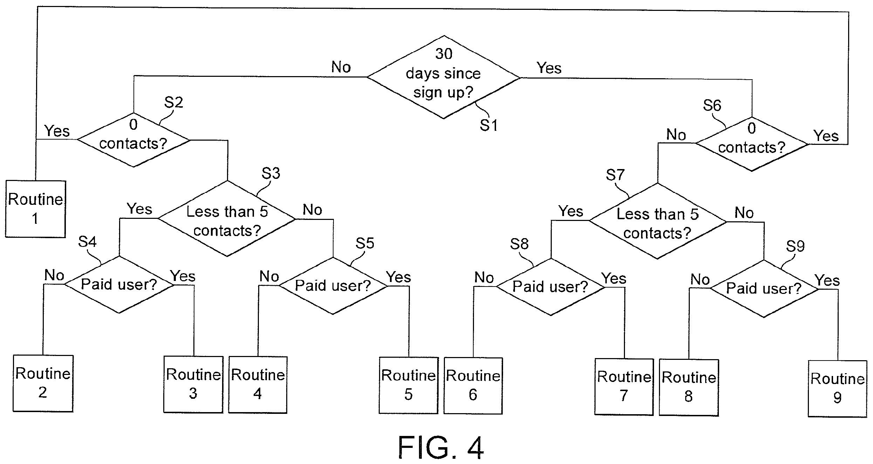

With reference to Figure 4, the process of how the content retrieval program 112 determines the relevant media content that is to be retrieved from the content server 108 is now described in more detail.

The process begins at step S1 where the content retrieval program 112 determines how many days since User A 102 registered with the communication client application 110. The number of days since User A registered with the communication client application 110 is one of a plurality of variables relating to User A's usage of the communication client application 110 that is stored in memory 124 of the user terminal 104 (or memory 114).

At S1 the program determines whether the number of days since User A 102 registered with the communication client application 110 has exceeded a threshold number of days. In Figure 4 the threshold number of days has been selected to be 30 days since User A 102 registered with the communication client application 110. It will be appreciated that the threshold of 30 days is merely an example and is not limiting in any way.

If it has been less than 30 days since User A 102 registered with the communication client application 110, then the process continues to step S2.

At step S2 the content retrieval program 112 determines whether User A 102 has any contacts 208. The number of contacts User A 102 has is one of a plurality of variables relating to User A's usage of the communication client application 110 that is stored in memory 124 of the user terminal 104. If User A 102 does not have any contacts the content retrieval program 112 proceeds to execute "Routine 1".

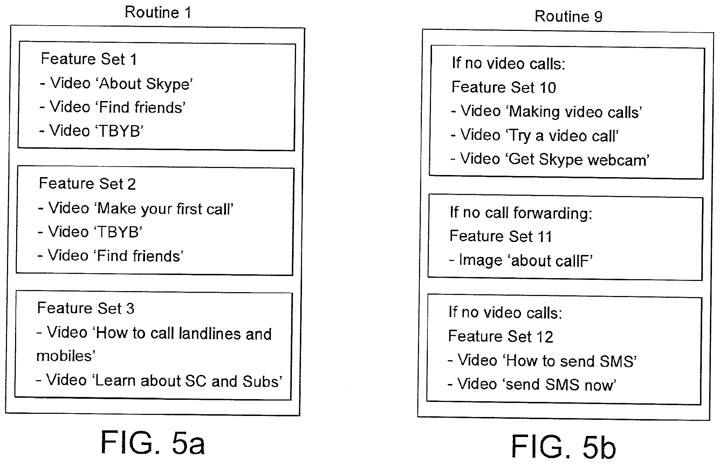

Routine 1 is now described in detail with reference to Figure 5a.

Routine 1 is executed by the content retrieval program 112 to determine media content relevant to the User A 102. In particular routine 1 is executed to determine media content relevant to users that have registered with the communication client application 110 less than 30 days ago and have zero contacts i.e. they are a relatively new user to the communication client application 110. When the program executes routine 1 the content retrieval program 112 will determine a 'feature set" that should be retrieved from the server 108. As shown in Figure 5a each feature set contains a plurality of media content that is relevant to User A. The feature sets in routine 1 comprise media content that is suitable for relatively new users to the communication client application 110, for example videos titled 'find friends' and 'how to make a call'.

Referring back to Figure 4, if at step S2 it is determined that User A 102 does have some contacts then the process proceeds to step S3 where the content retrieval program 112 determines whether User A 102 has less than 5 contacts. It will be appreciated that the threshold of 5 contacts is merely an example and is not limiting in any way.

If User A 102 does have less than 5 contacts the process proceeds to step S4 where the content retrieval program 112 determines whether User A is a paid user. A paid user is a user who has previously paid the client software provider for a service provided by the client software provider. If user A is not a paid user the content retrieval program 112 proceeds to execute "Routine 2". It will be understood that Routine 2 will include features sets that are relevant to User A 102.

If at step S4 it is determined that User A 102 is a paid user then the content retrieval program 112 proceeds to execute "Routine 3". It will be understood that Routine 3 will include features sets that are relevant to User A 102.

Referring back to step S3, if User A 102 has more than 5 contacts the process proceeds to step S5. At step S5 the content retrieval program 112 determines whether User A 102 is a paid user. If at step S5 it is determined that user A is not a paid user then the content retrieval program 112 proceeds to execute "Routine 4". It will be understood that Routine 4 will include features sets that are relevant to User A 102.

If at step S5 it is determined that User A 102 is a paid user then the content retrieval program 112 proceeds to execute "Routine 5". It will be understood that Routine 5 will include features sets that are relevant to User A 102.

Referring back to step S1, if it is determined that it has been more than 30 days since User A 102 registered with the communication client application 110, then the process continues to step S6.

At step S6 the content retrieval program 112 determines whether User A 102 has any contacts 208. If User A 102 does not have any contacts the content retrieval program 112 proceeds to execute "Routine 1". In this case User A has been registered with the communication client application 110 for some time but has not added any contacts, therefore suitable media content is retrieved for User A by executing Routine 1 i.e. videos titled 'find friends' and 'how to make a call'.

If at step S6 it is determined that that User A does have some contacts then the process proceeds to step S7 where the content retrieval program 112 determines whether User A has less than 5 contacts. It will be appreciated that the threshold of 5 contacts is merely an example and is not limiting in any way.

If User A does have less than 5 contacts the process proceeds to step S8 where the content retrieval program 112 determines whether User A is a paid user. If user A is not a paid user the content retrieval program 112 proceeds to execute "Routine 6". It will be understood that Routine 6 will include features sets that are relevant to User A 102.

If at step S8 it is determined that User A 102 is a paid user then the content retrieval program 112 proceeds to execute "Routine 7". It will be understood that Routine 7 will include features sets that are relevant to User A 102.

Referring back to step S7, if User A 102 has more than 5 contacts the process proceeds to step S9. At step S9 the content retrieval program 112 determines whether User A 102 is a paid user. If at step S9 it is determined that User A 102 is not a paid user then the content retrieval program 112 proceeds to execute "Routine 8". It will be understood that Routine 8 will include features sets that are relevant to User A 102.

If at step S9 it is determined that User A 102 is a paid user then the content retrieval program 112 proceeds to execute "Routine 9". It will be understood that Routine 9 will include features sets that are relevant to user A.

Routine 9 will now be described in detail with reference to Figure 5b.

Routine 9 is executed by the content retrieval program 112 to determine media content relevant to the User A. In particular routine 9 is executed to determine media content relevant to users that have registered with the communication client application 110 more than 30 days ago, have more than 5 contacts and are a paid user i.e. User A is relatively experienced user of the communication client application 110. When the content retrieval program 112 executes routine 9 the content retrieval program 112 reads the variables stored in memory 124 to determine a 'Feature Set" that should be retrieved from the content server 108.

The possible media content in the feature sets that may be retrieved from server content 108 when Routine 9 is executed will be relevant to User A and will be dependent on variables such as variables (iii) to (vii) mentioned earlier and other variables such as whether the user has made any video calls. It will be understood that the variables that will be read by the content retrieval program 112 when the content retrieval program 112 executes Routine 9 will relate to features of the communication client application 110 that will be relevant to users with a higher usage of the communication client application 110 than relatively new users to the communication client application 110.

As shown in Fig.5b, if the content retrieval program 112 reads the variables and determines that if User A has not made any video calls using the communication client application 110 a feature set comprising relevant media will be retrieved from the server 108 i.e. a feature set containing media entitled 'making video calls' and 'try a video call'. If however the content retrieval program 112 reads the variables and determines that User A has made video calls using the communication client application 110 then the feature set comprising media relating to video calls will not be retrieved from the server. This process ensures that media content is only retrieved from the content server 108 that is relevant to User A.

In the embodiment where the variables are held at the server in memory 114, the program can be executed at the server 108. In this embodiment the variables relating to User A's usage of the communication client application 110 can be made available to the server 108 in a number of different ways. For example the variable relating to the number of contacts that user A has may be retrieved from a contact list server (not shown in Figure 1) connected to the network 106.

In a further example, the communication client application 110 may provide the variables relating to User A's usage of the communication client application 110 to the content server 108. In this case the content retrieval program 112 may be executed on the server to read these variables to determine the relevant media that is to be sent from the content store 118 at the content server 108 to the communication client application 110 at the user terminal 104.

In a case where only some of the variables are made available to the server, the server will execute only a part of the content retrieval program 112. In that case the user terminal could execute the remaining part by accessing variables stored locally in memory 124.

Referring back to Figure 2, the user interface 200 that is displayed on the user terminal 104 once the media content is retrieved from the content server 108 will now be described.

The media content retrieved from the content server 108 will include an image 232 which is displayed in the video or images area 220, and the title 224 of the media content which is displayed in the title area 218.

Upon activation of a play button 228 in the video or images area 220 by User A, the content server 108 will start to stream the relevant media content to the User A at the user terminal 104. It will be appreciated to those skilled in the art that the term 'stream' refers to how media content is delivered to an end-user via a telecommunication network.

It will be appreciated that the media content that is retrieved from the content server 108 may contain more than one video or image that is relevant to User A. Once User A 102 has viewed a video or image, the next time the user logs into the communication client application 110 and accesses the help channel 216 User A will be presented with an image 232 in the 'video or images area' 220 of the next image or video that be displayed. Again upon activation of the play button 228 in the video or images area 220 by User A 102, the server 108 will start to stream the next video or image to the User A 102 at the user terminal 104

When User A 102 closes media content using activation button 226, activation button 226 is replaced with a 'view all videos button' (not shown in Figure 2) that allows the user to view links to all the videos that are relevant to the user so that User A 102 may view more than one video. The links may by way of example include a thumbnail image of the video, a picture, icon and/or text of the video's title.

If another user of the P2P communication system (not shown in Figure 1) referred hereinafter as User B places a call to User A after User A has selected to view the media by pressing button 228, the media will be paused. If User A 102 decides to accept the call then the help channel window 216 is switched to a call in process window. During the call the media will remain paused. When the call between User A and User B has finished, User A will return to the help channel where he may select the action button 228 to resume viewing the media.

While this invention has been particularly shown and described with reference to preferred embodiments, it will be understood to those skilled in the art that various changes in form and detail may be made without departing from the scope of the invention as defined by the appendant claims.

## Claims

1. A method of providing selectable media content from a server (108) to a user (102) at a user terminal (104), the method comprising:
storing variables relating to the user's familiarity with a communication client application (110) executable at the user terminal (104); executing program code (112) to read said variables to determine the media content to be provided to the user (102) based on said variables;
retrieving said determined media content from the server (108); and
providing said media content to the user (102) at the user terminal (104) wherein the user's familiarity with the communication client application (110) is assessed based on the user's usage of the communication client application (110); wherein the user's usage is based on at least one of:
the number of days since the user (102) registered;
the number of contacts that the user (102) has;
whether the user (102) has made any calls to a PSTN or mobile device;
whether the user (102) has set up voice mail;
whether the user (102) has set up call forwarding;
whether the user (102) has sent an SMS to a mobile device;
whether the user (102) has made any VOIP calls;
whether the user (102) has made any video calls.

2. A method according to claim 1, wherein the variables are stored at one of: said user terminal (104) and said server (108).

3. A method according to any preceding claim, wherein the program code is stored at said server (108) and wherein the communication client application (110) retrieves the program code from said server (108) and executes the program code responsive to the user (102) interacting with the communication client application (110).

4. A method according to any preceding claim, wherein at least one of the retrieval and execution of said program code is performed responsive to an interaction comprising (i) the user (102) logging into the communication client application (110), or (ii) the user (102) selecting a window provided in the communication client application (110); wherein responsive to the user (102) interacting with the communication client application (110) the communication client application (110) compares program code stored at the user terminal (104) with program code stored at the server (108), and wherein the program code stored at the user terminal (104) is executed by the communication client application (110) if the program code stored at the user terminal (104) is the same as the program code stored at the server (108), and wherein the program code stored at the server (108) is retrieved and executed by the communication client application (110) if the program code stored at the server (108) is an updated version of the program code stored at the user terminal (104).

5. A method according to claim 1, wherein the communication client application (110) provides the variables to the server (108), and the program code is executed at said server (108).

6. A method according to any preceding claim, wherein the media content is a video, for example a tutorial video; or an audio recording; or text and images.

7. A user terminal (104) for receiving selectable media content from a server (108), the user terminal (104) comprising:
means for executing a communication client application (110);
means for accessing variables relating to a user's (102) familiarity with the communication client application (110); means for executing program code (112) to read said variables to determine the media content to be provided to the user (102) based on said variables;
means for retrieving said determined media content from the server (108); and
means for providing said media content to the user (102) at the user terminal (104); wherein the user's familiarity with the communication client application (110) is assessed based on the user's usage of the communication client application (110); wherein the user's usage is based on at least one of:
the number of days since the user (102) registered;
the number of contacts that the user (102) has;
whether the user (102) has made any calls to a PSTN or mobile device;
whether the user (102) has set up voice mail;
whether the user (102) has set up call forwarding;
whether the user (102) has sent an SMS to a mobile device;
whether the user (102) has made any VOIP calls;
whether the user (102) has made any video calls.

8. A server (108) for providing media content to a user terminal (104), the server (108) comprising:
storage means (118) for storing media content;
means for accessing variables relating to a user's (102) familiarity with a communication client application (110) executable at the user terminal (104); selection means for selecting media content from said storage means (118), said selection based on said variables; and
means for providing said media content to the user terminal (104) in response to receiving a request from the user terminal (104); wherein the user's familiarity with the communication client application (110) is assessed based on the user's usage of the communication client application (110); wherein the user's usage is based on at least one of:
the number of days since the user (102) registered;
the number of contacts that the user (102) has;
whether the user (102) has made any calls to a PSTN or mobile device;
whether the user (102) has set up voice mail;
whether the user (102) has set up call forwarding;
whether the user (102) has sent an SMS to a mobile device;
whether the user (102) has made any VOIP calls;
whether the user (102) has made any video calls.

9. A computer program product for providing selectable media content from a server (108) to a user (102) at a user terminal (104), the computer program product comprising code embodied on a non-transient computer-readable medium and configured so as when executed on a processing apparatus to:
store variables relating to the user's familiarity with a communication client application (110) executable at the user terminal (104); and
trigger the execution of further program code (112) to read said variables to determine the media content to be provided to the user (102) based on said variables, thereby enabling the determined media content from the server (108) to be retrieved and provided to the user (102) at the user terminal (104), wherein the user's familiarity with the communication client application (110) is assessed based on the user's usage of the communication client application (110); wherein the user's usage is based on at least one of:
the number of days since the user (102) registered;
the number of contacts that the user (102) has;
whether the user (102) has made any calls to a PSTN or mobile device;
whether the user (102) has set up voice mail;
whether the user (102) has set up call forwarding;
whether the user (102) has sent an SMS to a mobile device;
whether the user (102) has made any VOIP calls;
whether the user (102) has made any video calls.

10. A communication system (100) comprising a user terminal (104) and a server (108) connected to a communication network (106), wherein the user terminal (104) receives selectable media content from the server (108) over the communication network (106), the system comprising:
means at the user terminal (104) for executing a communication client application (110); means for accessing variables relating to a user's familiarity with the communication client application (110); means for executing program code (112) to read said variables to determine the media content to be provided to a user (102) at the user terminal (104) based on said variables; and
means at the server (108) for providing said media content to the user terminal (104) in response to receiving a request from the user terminal (104); wherein the user's familiarity with the communication client application (110) is assessed based on the user's usage of the communication client application (110); wherein the user's usage is based on at least one of:
the number of days since the user (102) registered;
the number of contacts that the user (102) has;
whether the user (102) has made any calls to a PSTN or mobile device;
whether the user (102) has set up voice mail;
whether the user (102) has set up call forwarding;
whether the user (102) has sent an SMS to a mobile device;
whether the user (102) has made any VOIP calls;
whether the user (102) has made any video calls.

## Patentansprüche

1. Verfahren zum Versorgen eines Benutzers (102) an einem Benutzerendgerät (104) mit auswählbarem Medieninhalt aus einem Server (108), wobei das Verfahren aufweist:
Speichern von Variablen, die auf die Vertrautheit des Benutzers mit einer Kommunikations-Client-Anwendung (110) bezogen sind, die am Benutzerendgerät (104) ausführbar ist;
Ausführen von Programmcode (112) zum Lesen der genannten Variablen zum Bestimmen des Medieninhalts, mit dem der Benutzer (102) zu versorgen ist, auf Basis der genannten Variablen;
Abrufen des genannten bestimmten Medieninhalts aus dem Server (108) und
Versorgen des Benutzers (102) am Benutzerendgerät (104) mit dem genannten Medieninhalt,
wobei die Vertrautheit des Benutzers mit der Kommunikations-Client-Anwendung (110) auf Basis der Nutzung der Kommunikations-Client-Anwendung (110) durch den Benutzer bewertet wird;
wobei die Nutzung durch den Benutzer auf wenigstens einem der folgenden basiert:
der Anzahl von Tagen seit der Registrierung des Benutzers (102);
der Anzahl von Kontakten, die der Benutzer (102) hat;
ob der Benutzer (102) Anrufe an ein PSTN- oder Mobilgerät getätigt hat;
ob der Benutzer (102) einen Anrufbeantworter eingerichtet hat;
ob der Benutzer (102) die Anrufumleitung eingerichtet hat;
ob der Benutzer (102) eine SMS an ein Mobilgerät gesendet hat;
ob der Benutzer (102) VoIP-Anrufe getätigt hat;
ob der Benutzer (102) Videoanrufe getätigt hat.

2. Verfahren nach Anspruch 1, wobei die Variablen an einem von dem genannten Benutzerendgerät (104) und dem genannten Server (108) gespeichert werden.

3. Verfahren nach einem der vorhergehenden Ansprüche,
wobei der Programmcode an dem genannten Server (108) gespeichert wird und wobei die Kommunikations-Client-Anwendung (110) den Programmcode aus dem genannten Server (108) abruft und den Programmcode auf eine Interaktion des Benutzers (102) mit der Kommunikations-Client-Anwendung (110) reagierend ausführt.

4. Verfahren nach einem der vorhergehenden Ansprüche,
wobei das Abrufen und/oder die Ausführung des genannten Programmcodes auf eine Interaktion reagierend durchgeführt wird, die (i) das Anmelden des Benutzers (102) bei der Kommunikations-Client-Anwendung (110) oder (ii) das Auswählen eines in der Kommunikations-Client-Anwendung (110) bereitgestellten Fensters durch den Benutzer (102) aufweist;
wobei die Kommunikations-Client-Anwendung (110) auf die Interaktion des Benutzers (102) mit der Kommunikations-Client-Anwendung (110) reagierend am Benutzerendgerät (104) gespeicherten Programmcode mit am Server (108) gespeicherten Programmcode vergleicht und wobei der am Benutzerendgerät (104) gespeicherte Programmcode durch die Kommunikations-Client-Anwendung (110) ausgeführt wird, wenn der am Benutzerendgerät (104) gespeicherte Programmcode der gleiche wie der am Server (108) gespeicherte Programmcode ist, und wobei der am Server (108) gespeicherte Programmcode durch die Kommunikations-Client-Anwendung (110) abgerufen und ausgeführt wird, wenn der am Server (108) gespeicherte Programmcode eine aktualisierte Version des am Benutzerendgerät (104) gespeicherten Programmcodes ist.

5. Verfahren nach Anspruch 1, wobei die Kommunikations-Client-Anwendung (110) dem Server (108) die Variablen bereitstellt und der Programmcode an dem genannten Server (108) ausgeführt wird.

6. Verfahren nach einem der vorhergehenden Ansprüche,
wobei der Medieninhalt ein Video, zum Beispiel eine Video-Anleitung, oder eine Audioaufnahme oder Text und Bilder ist.

7. Benutzerendgerät (104) zum Empfangen von auswählbarem Medieninhalt von einem Server (108), wobei das Benutzerendgerät (104) aufweist:
ein Mittel zum Ausführen einer Kommunikations-Client-Anwendung (110);
ein Mittel zum Zugreifen auf Variablen, die auf die Vertrautheit eines Benutzers (102) mit der Kommunikations-Client-Anwendung (110) bezogen sind;
ein Mittel zum Ausführen von Programmcode (112) zum Lesen der genannten Variablen zum Bestimmen des Medieninhalts, mit dem der Benutzer (102) zu versorgen ist, auf Basis der genannten Variablen;
ein Mittel zum Abrufen des genannten bestimmten Medieninhalts aus dem Server (108) und
ein Mittel zum Versorgen des Benutzers (102) am Benutzerendgerät (104) mit dem genannten Medieninhalt;
wobei die Vertrautheit des Benutzers mit der Kommunikations-Client-Anwendung (110) auf Basis der Nutzung der Kommunikations-Client-Anwendung (110) durch den Benutzer bewertet wird;
wobei die Nutzung durch den Benutzer auf wenigstens einem der folgenden basiert:
der Anzahl von Tagen seit der Registrierung des Benutzers (102);
der Anzahl von Kontakten, die der Benutzer (102) hat;
ob der Benutzer (102) Anrufe an ein PSTN- oder Mobilgerät getätigt hat;
ob der Benutzer (102) einen Anrufbeantworter eingerichtet hat;
ob der Benutzer (102) die Anrufumleitung eingerichtet hat;
ob der Benutzer (102) eine SMS an ein Mobilgerät gesendet hat;
ob der Benutzer (102) VoIP-Anrufe getätigt hat;
ob der Benutzer (102) Videoanrufe getätigt hat.

8. Server (108) zum Versorgen eines Benutzerendgeräts (104) mit Medieninhalt, wobei der Server (108) aufweist:
ein Speichermittel (118) zum Speichern von Medieninhalt;
ein Mittel zum Zugreifen auf Variablen, die auf die Vertrautheit eines Benutzers (102) mit einer Kommunikations-Client-Anwendung (110) bezogen sind, die am Benutzerendgerät (104) ausführbar ist;
ein Auswählmittel zum Auswählen von Medieninhalt aus dem genannten Speichermittel (118), wobei die genannte Auswahl auf den genannten Variablen basiert; und
ein Mittel zum Versorgen des Benutzerendgeräts (104) mit dem genannten Medieninhalt als Reaktion auf den Empfang einer Anforderung vom Benutzerendgerät (104);
wobei die Vertrautheit des Benutzers mit der Kommunikations-Client-Anwendung (110) auf Basis der Nutzung der Kommunikations-Client-Anwendung (110) durch den Benutzer bewertet wird;
wobei die Nutzung durch den Benutzer auf wenigstens einem der folgenden basiert:
der Anzahl von Tagen seit der Registrierung des Benutzers (102);
der Anzahl von Kontakten, die der Benutzer (102) hat;
ob der Benutzer (102) Anrufe an ein PSTN- oder Mobilgerät getätigt hat;
ob der Benutzer (102) einen Anrufbeantworter eingerichtet hat;
ob der Benutzer (102) die Anrufumleitung eingerichtet hat;
ob der Benutzer (102) eine SMS an ein Mobilgerät gesendet hat;
ob der Benutzer (102) VoIP-Anrufe getätigt hat;
ob der Benutzer (102) Videoanrufe getätigt hat.

9. Computerprogrammprodukt zum Versorgen eines Benutzers (102) an einem Benutzerendgerät (104) mit auswählbarem Medieninhalt aus einem Server (108), wobei das Computerprogrammprodukt Code aufweist, der auf einem nichtflüchtigen computerlesbaren Medium ausgestaltet ist und konfiguriert ist zu Folgendem bei Ausführung in einer Verarbeitungsvorrichtung:
Speichern von Variablen, die auf die Vertrautheit des Benutzers mit einer Kommunikations-Client-Anwendung (110) bezogen sind, die am Benutzerendgerät (104) ausführbar ist; und
Auslösen der Ausführung von weiterem Programmcode (112) zum Lesen der genannten Variablen zum Bestimmen des Medieninhalts, mit dem der Benutzer (102) zu versorgen ist, auf Basis der genannten Variablen;
dadurch Ermöglichen des Abrufens des bestimmten Medieninhalts aus dem Server (108) und Versorgen des Benutzers (102) am Benutzerendgerät (104) damit,
wobei die Vertrautheit des Benutzers mit der Kommunikations-Client-Anwendung (110) auf Basis der Nutzung der Kommunikations-Client-Anwendung (110) durch den Benutzer bewertet wird;
wobei die Nutzung durch den Benutzer auf wenigstens einem der folgenden basiert:
der Anzahl von Tagen seit der Registrierung des Benutzers (102);
der Anzahl von Kontakten, die der Benutzer (102) hat;
ob der Benutzer (102) Anrufe an ein PSTN- oder Mobilgerät getätigt hat;
ob der Benutzer (102) einen Anrufbeantworter eingerichtet hat;
ob der Benutzer (102) die Anrufumleitung eingerichtet hat;
ob der Benutzer (102) eine SMS an ein Mobilgerät gesendet hat;
ob der Benutzer (102) VoIP-Anrufe getätigt hat;
ob der Benutzer (102) Videoanrufe getätigt hat.

10. Kommunikationssystem (100), das ein Benutzerendgerät (104) und einen mit einem Kommunikationsnetzwerk (106) verbundenen Server (108) aufweist, wobei das Benutzerendgerät (104) auswählbaren Medieninhalt aus dem Server (108) über das Kommunikationsnetzwerk (106) empfängt, wobei das System aufweist:
ein Mittel am Benutzerendgerät (104) zum Ausführen einer Kommunikations-Client-Anwendung (110);
ein Mittel zum Zugreifen auf Variablen, die auf die Vertrautheit eines Benutzers mit der Kommunikations-Client-Anwendung (110) bezogen sind;
ein Mittel zum Ausführen von Programmcode (112) zum Lesen der genannten Variablen zum Bestimmen des Medieninhalts, mit dem der Benutzer (102) am Benutzerendgerät (104) zu versorgen ist, auf Basis der genannten Variablen und
ein Mittel am Server (108) zum Versorgen des Benutzerendgeräts (104) mit dem genannten Medieninhalt als Reaktion auf den Empfang einer Anforderung vom Benutzerendgerät (104);
wobei die Vertrautheit des Benutzers mit der Kommunikations-Client-Anwendung (110) auf Basis der Nutzung der Kommunikations-Client-Anwendung (110) durch den Benutzer bewertet wird;
wobei die Nutzung durch den Benutzer auf wenigstens einem der folgenden basiert:
der Anzahl von Tagen seit der Registrierung des Benutzers (102);
der Anzahl von Kontakten, die der Benutzer (102) hat;
ob der Benutzer (102) Anrufe an ein PSTN- oder Mobilgerät getätigt hat;
ob der Benutzer (102) einen Anrufbeantworter eingerichtet hat;
ob der Benutzer (102) die Anrufumleitung eingerichtet hat;
ob der Benutzer (102) eine SMS an ein Mobilgerät gesendet hat;
ob der Benutzer (102) VoIP-Anrufe getätigt hat;
ob der Benutzer (102) Videoanrufe getätigt hat.

## Revendications

1. Procédé de fourniture d'un contenu média sélectionnable à partir d'un serveur (108) jusqu'à un utilisateur (102) au niveau d'un terminal d'utilisateur (104), le procédé comprenant les opérations consistant à :
stocker des variables relatives à la familiarité d'un utilisateur avec une application client de communication (110) exécutable au niveau du terminal d'utilisateur (104) ;
exécuter un code de programme (112) pour lire lesdites variables afin de déterminer le contenu média devant être fourni à l'utilisateur (102) sur la base desdites variables ;
récupérer ledit contenu média déterminé à partir du serveur (108) ; et
fournir ledit contenu média à l'utilisateur (102) au niveau du terminal d'utilisateur (104),
cas dans lequel la familiarité de l'utilisateur avec l'application client de communication (110) est évaluée sur la base de l'usage fait par l'utilisateur de l'application client de communication (110) ;
cas dans lequel l'usage de l'utilisateur est basé sur au moins un élément parmi :
le nombre de jours depuis que l'utilisateur (102) s'est inscrit ;
le nombre de contacts que possède l'utilisateur (102) ;
si l'utilisateur (102) a fait des appels vers un PSTN ou un dispositif mobile ;
si l'utilisateur (102) a mis en place une messagerie vocale ;
si l'utilisateur (102) a mis en place un réacheminement d'appels ;
si l'utilisateur (102) a envoyé un SMS à un dispositif mobile ;
si l'utilisateur (102) a effectué des appels VOIP ;
si l'utilisateur (102) a effectué des appels vidéo.

2. Procédé selon la revendication 1, les variables étant stockées au niveau de l'un parmi : ledit terminal d'utilisateur (104) et ledit serveur (108).

3. Procédé selon une quelconque revendication précédente, le code de programme étant stocké au niveau dudit serveur (108), et l'application client de communication (110) récupérant le code de programme à partir dudit serveur (108) et exécutant le code de programme en réaction au fait que l'utilisateur (102) agit en interaction avec l'application client de communication (110).

4. Procédé selon une quelconque revendication précédente, au moins une opération parmi la récupération et l'exécution dudit code de programme étant réalisée en réaction à une interaction comprenant (i) le fait que l'utilisateur (102) entre en session avec l'application client de communication (110), ou (ii) le fait que l'utilisateur (102) sélectionne une fenêtre fournie dans l'application client de communication (110) ;
cas dans lequel en réaction au fait que l'utilisateur (102) agit en interaction avec l'application client de communication (110), l'application client de communication (110) compare un code de programme stocké au niveau du terminal d'utilisateur (104) avec un code de programme stocké au niveau du serveur (108),
et cas dans lequel le code de programme stocké au niveau du terminal d'utilisateur (104) est exécuté par l'application client de communication (110) si le code de programme stocké au niveau du terminal d'utilisateur (104) est le même que le code de programme stocké au niveau du serveur (108),
et cas dans lequel le code de programme stocké au niveau du serveur (108) est récupéré et exécuté par l'application client de communication (110) si le code de programme stocké au niveau du serveur (108) est une version mise à jour du code de programme stocké au niveau du terminal d'utilisateur (104).

5. Procédé selon la revendication 1, l'application client de communication (110) fournissant les variables au serveur (108), et le code de programme étant exécuté au niveau dudit serveur (108).

6. Procédé selon une quelconque revendication précédente, le contenu média étant une vidéo, par exemple une vidéo tutorielle ; ou un enregistrement audio ; ou un texte et des images.

7. Terminal d'utilisateur (104) pour recevoir un contenu média sélectionnable à partir d'un serveur (108), le terminal d'utilisateur (104) comprenant :
des moyens pour exécuter une application client de communication (110) ;
des moyens pour accéder à des variables relatives à la familiarité d'un utilisateur (102) avec l'application client de communication (110) ;
des moyens pour exécuter un code de programme (112) pour lire lesdites variables afin de déterminer le contenu média devant être fourni à l'utilisateur (102) sur la base desdites variables ;
des moyens pour récupérer ledit contenu média déterminé à partir du serveur (108) ; et
des moyens pour fournir ledit contenu média à l'utilisateur (102) au niveau du terminal d'utilisateur (104) ;
cas dans lequel la familiarité de l'utilisateur avec l'application client de communication (110) est évaluée sur la base de l'usage fait par l'utilisateur de l'application client de communication (110) ;
cas dans lequel l'usage de l'utilisateur est basé sur au moins un élément parmi :
le nombre de jours depuis que l'utilisateur (102) s'est inscrit ;
le nombre de contacts que possède l'utilisateur (102) ;
si l'utilisateur (102) a fait des appels vers un PSTN ou un dispositif mobile ;
si l'utilisateur (102) a mis en place une messagerie vocale ;
si l'utilisateur (102) a mis en place un réacheminement d'appels ;
si l'utilisateur (102) a envoyé un SMS à un dispositif mobile ;
si l'utilisateur (102) a effectué des appels VOIP ;
si l'utilisateur (102) a effectué des appels vidéo.

8. Serveur (108) pour fournir un contenu média à un terminal d'utilisateur (104), le serveur (108) comprenant :
des moyens de stockage (118) pour stocker le contenu média ;
des moyens pour accéder à des variables relatives à la familiarité d'un utilisateur (102) avec une application client de communication (110) exécutable au niveau du terminal d'utilisateur (104) ;
des moyens de sélection pour sélectionner un contenu média à partir desdits moyens de stockage (118), ladite sélection étant basée sur lesdites variables ; et
des moyens pour fournir ledit contenu média au terminal d'utilisateur (104) en réaction à la réception d'une requête en provenance du terminal d'utilisateur (104) ;
cas dans lequel la familiarité de l'utilisateur avec l'application client de communication (110) est évaluée sur la base de l'usage fait par l'utilisateur de l'application client de communication (110) ;
cas dans lequel l'usage de l'utilisateur est basé sur au moins un élément parmi :
le nombre de jours depuis que l'utilisateur (102) s'est inscrit ;
le nombre de contacts que possède l'utilisateur (102) ;
si l'utilisateur (102) a fait des appels vers un PSTN ou un dispositif mobile ;
si l'utilisateur (102) a mis en place une messagerie vocale ;
si l'utilisateur (102) a mis en place un réacheminement d'appels ;
si l'utilisateur (102) a envoyé un SMS à un dispositif mobile ;
si l'utilisateur (102) a effectué des appels VOIP ;
si l'utilisateur (102) a effectué des appels vidéo.

9. Produit à programme informatique pour fournir un contenu média sélectionnable à partir d'un serveur (108) jusqu'à un utilisateur (102) au niveau d'un terminal d'utilisateur (104), le produit à programme informatique comprenant un code concrétisé sur un support lisible par ordinateur non transitoire, et configuré de sorte à, lorsqu'il est exécuté sur un appareil de traitement :
stocker des variables relatives à la familiarité de l'utilisateur avec une application client de communication (110) exécutable au niveau du terminal d'utilisateur (104) ; et
déclencher l'exécution d'un code de programme supplémentaire (112) pour lire lesdites variables afin de déterminer le contenu média devant être fourni à l'utilisateur (102) sur la base desdites variables, ce qui permet par conséquent au contenu média déterminé à partir du serveur (108) d'être récupéré et fourni à l'utilisateur (102) au niveau du terminal d'utilisateur (104),
cas dans lequel la familiarité de l'utilisateur avec l'application client de communication (110) est évaluée sur la base de l'usage fait par l'utilisateur de l'application client de communication (110) ;
cas dans lequel l'usage de l'utilisateur est basé sur au moins un élément parmi :
le nombre de jours depuis que l'utilisateur (102) s'est inscrit ;
le nombre de contacts que possède l'utilisateur (102) ;
si l'utilisateur (102) a fait des appels vers un PSTN ou un dispositif mobile ;
si l'utilisateur (102) a mis en place une messagerie vocale ;
si l'utilisateur (102) a mis en place un réacheminement d'appels ;
si l'utilisateur (102) a envoyé un SMS à un dispositif mobile ;
si l'utilisateur (102) a effectué des appels VOIP ;
si l'utilisateur (102) a effectué des appels vidéo.

10. Système de communication (100) comprenant un terminal d'utilisateur (104) et un serveur (108) connecté à un réseau de communication (106), cas dans lequel le terminal d'utilisateur (104) reçoit un contenu média sélectionnable à partir du serveur (108) par l'intermédiaire du réseau de communication (106), le système comprenant :
des moyens, au niveau du dispositif d'utilisateur (104), pour exécuter une application client de communication (110) ;
des moyens pour accéder à des variables relatives à la familiarité d'un utilisateur (102) avec l'application client de communication (110) ;
des moyens pour exécuter un code de programme (112) pour lire lesdites variables afin de déterminer le contenu média devant être fourni à un utilisateur (102) au niveau du terminal d'utilisateur (104) sur la base desdites variables ; et
des moyens, au niveau du serveur (108), pour fournir ledit contenu média au terminal d'utilisateur (104) en réaction à la réception d'une requête en provenance du terminal d'utilisateur (104) ;
cas dans lequel la familiarité de l'utilisateur avec l'application client de communication (110) est évaluée sur la base de l'usage fait par l'utilisateur de l'application client de communication (110) ;
cas dans lequel l'usage de l'utilisateur est basé sur au moins un élément parmi :
le nombre de jours depuis que l'utilisateur (102) s'est inscrit ;
le nombre de contacts que possède l'utilisateur (102) ;
si l'utilisateur (102) a fait des appels vers un PSTN ou un dispositif mobile ;
si l'utilisateur (102) a mis en place une messagerie vocale ;
si l'utilisateur (102) a mis en place un réacheminement d'appels ;
si l'utilisateur (102) a envoyé un SMS à un dispositif mobile ;
si l'utilisateur (102) a effectué des appels VOIP ;
si l'utilisateur (102) a effectué des appels vidéo.
